# EUROPÄISCHE PATENTSCHRIFT

(11) **EP 1 157 362 B1**
(45) Veröffentlichungstag und Bekanntmachung des Hinweises auf die Patenterteilung: **26.03.2003**
(21) Anmeldenummer: 01925356.6
(22) Anmeldetag: 22.02.2001
(51) Int. Cl.: G07B 15/00, G06F 17/60

(54) **ZUGANGSBERECHTIGUNGS-BUCHUNGSVERFAHREN**
METHOD OF BOOKING ACCESS AUTHORISATION
PROCEDE D'ENREGISTREMENT D'UNE AUTORISATION D'ACCES

(30) Priorität: 29.03.2000 DE 10015732
(43) Veröffentlichungstag der Anmeldung: 28.11.2001
(73) Patentinhaber: SkiData AG, 5083 Gartenau (AT)
(72) Erfinder: Stockhammer, Rudolf, 5340 St. Gilgen (AT)
(74) Vertreter: Berngruber, Otto, Dr. Dipl.-Chem.
(86) Internationale Anmeldenummer: EP0102029
(87) Internationale Veröffentlichungsnummer: WO01073691

(56) Entgegenhaltungen:
- EP-A- 0 210 963
- WO-A-94/27258
- WO-A-97/40475
- WO-A-98/37524
- WO-A-98/58510
- DE-A- 19 823 907
- FR-A- 2 782 211
- US-A- 3 622 995
- US-A- 5 066 853
- US-A- 5 724 520

## Beschreibung

Die Erfindung bezieht sich auf ein Verfahren zum Buchen der Zugangsberechtigung zu einer Anlage, die mit einem codierbaren Datenträger über ein Zutrittsterminal zugänglich ist; welches mit einer Datenkommunikationseinrichtung zum Lesen sowie zum Lesen und Codieren von Daten auf dem Datenträger versehen ist.

Solche Zutrittsterminals sind insbesondere an den Liften von Wintersportanlagen vorgesehen. Als Datenträger werden dabei insbesondere berührungslos kommunizierende Datenträger eingesetzt, insbesondere RFID (radio frequency identification)-Transponder, die an dem Zutrittsterminal auch mit Energie zur Datenkommunikation versorgt werden. Der berührungslos kommunzierende Datenträger kann z.B. in eine Armbanduhr oder in eine Karte integriert sein, welche am Kleidungsstück befestigt werden kann.

Beim Kauf der Zugangsberechtigung wird die gekaufte Zugangsberechtigung, z.B. ein Tagesskipaß für einen Erwachsenen, auf den Datenträger codiert. Der Kauf, der an einer Kasse der Wintersportanlage erfolgt, nimmt damit eine bestimmte Zeit in Anspruch. Die Kasse einer Wintersportanlage erlebt jedoch vor allem am Vormittag oft einen so großen Ansturm, dass lange Wartezeiten an der Kasse zu den qualvollen Erfahrungen vieler Wintersportler gehören.

Nach US-A-5,742,520 ruft ein Kunde, der z. B. einen Flug reservieren will, ein Reservierungszentrum an, zahlt mit Kreditkarte und erhält eine Reservierungsnummer, die in einer ID-Karte abgelegt wird, die ihm zugeschickt wird. Diese Reservierungsnummer wird zugleich dem Flughafen übermittelt und dort abgespeichert. Am Flughafen wird die Reservierungsnummer auf der ID-Karte mit einem Lesegerät mit der abgespeicherten Reservierungsnummer verglichen und bei Übereinstimmung dem Kunden der Zutritt zum Flugzeug ermöglicht.

Aufgabe der Erfindung ist es, ein Buchungsverfahren bereitzustellen, mit dem die Kassen oder sonstigen Einrichtungen, an denen die gekaufte Zugangsberechtigung auf den Datenträger codiert wird, wesentlich entlastet werden.

Dies wird erfindungsgemäß mit dem in Anspruch 1 gekennzeichneten Verfahren erreicht. In den Unteransprüchen sind vorteilhafte Ausgestaltungen der Erfindung wiedergegeben.

Als Datenträger wird insbesondere ein elekronischer Datenträger verwendet. Sowohl kontaktbehaftete wie berührungslos arbeitende elektronische Datenträger, wie RFID-Transponder, weisen einen Mikrochip auf. Jeder Mikrochip hat dabei eine eindeutige Kennung (Chipseriennummer oder andere Nummer oder einen anderen Code), mit der er codiert ist. Diese im Chip abgelegte Kennung bildet den Ausgangspunkt der Erfindung. Wenn die Chipseriennummer oder sonstige Kennung des Chips nämlich auch sichtbar am Datenträger angebracht ist, kann das erfindungsgemäße Buchungsverfahren durchgeführt werden.

Dazu wählt der Sportler oder allgemein Kunde beispielsweise bei seiner Anfahrt zum Wintersportgebiet bzw. zur Anlage z.B. mit einem Mobiltelefon die Telefonnummer, die für Buchungen von Zugangsberechtigungen in dem betreffenden Wintersportgebiet bzw. der betreffenden Anlage vorgesehen ist. Er übermittelt dann die auf seinem individuellen Datenträger sichtbar angebrachten Identifikationsdaten, z.B. die Chipseriennummer, zusammen mit den weiteren Zugangsberechtigungsdaten, z.B. die Gültigkeitsdauer, wie Tagesskipaß, Kartentyp, z.B. Erwachsener, und dergleichen Informationen, einschließlich Skigebiet oder Skilift, vorzugsweise per SMS an diese Telefonnummer.

Die Identifikationsdaten, z.B. Chipseriennummer, und die von der buchenden Person ausgewählten Zugangsberechtigungsdaten werden weitergeleitet und an dem Zutrittsterminal der Wintersport- oder sonstigen Anlage in einem Rechner gespeichert. Wenn der Wintersportler bzw. Kunde an der Anlage angelangt ist und am Zutrittsterminal erscheint, vergleicht der Rechner die Identifikationsdaten bzw. Chipseriennummer, mit der der Datenträger codiert ist, mit den abgespeicherten Identifikationsdaten bzw. der abgespeicherten Chipseriennummer.

Bei Übereinstimmung und damit Identifikation des Datenträgers der Person, die zuvor die Buchung durchgeführt hatte, werden die gebuchten Zutrittsberechtigungsdaten, wie Gültigkeitsdauer, z.B. Tagespaß, Kartentyp, z.B. Erwachsener und dergleichen in den Chip des Datenträgers geladen.

Das Lesen der Identifikationsdaten bzw. der Chipseriennummer, mit der der Datenträger codiert ist, und das Laden des Chips des Datenträgers mit den Zugangsberechtigungsdaten erfolgt durch die an dem Zutrittsterminal vorgesehene Datenkommunikationseinrichtung, also ein Schreib/Lesegerät. Bei Erstzutritt zu dem Zutrittsterminal während der Gültigkeitsdauer ist der Chip des Datenträgers mit diesem Zu- : gangsberechtigungsdaten also nicht codiert, was von der Datenkommunikationseinrichtung am Zutrittsterminal erfaßt wird.

Das erfindungsgemäße Verfahren ist zwar in erster Linie zur Buchung von Zugangsberechtigungen zu Wintersportanlagen bestimmt, es ist jedoch auch zur Buchung der Zugangsberechtigung zu anderen Freizeit-, Sport- und Unterhaltungseinrichtungen und -anlagen, wie Freizeitparks, Schwimmbäder, Sport- und andere Großveranstaltungen und Messen einsetzbar, generell also bei allen Anlagen, die mit einem gültigen Datenträger über ein Zutrittsterminal zugänglich sind.

Die Daten zur Identifikation des Datenträgers sind zwar vorzugsweise die Seriennummern der Mikrochips, es sind jedoch auch andere, insbesondere chipherstellungsspezifische Daten verwendbar.

Der Datenträger kann z.B. eine kontaktbehaftete Chipkarte sein. Vorzugsweise wird als Datenträger jedoch ein berührungslos arbeitender Datenträger mit einem vorzugsweise passiven RFID- Transponder verwendet. Ein solcher Datenträger weist eine Antenne auf. Chip und Antenne können in eine Karte integriert sein, die in oder an einem Kleidungsstück getragen werden kann, er kann jedoch auch in ein Kleidungsstück, beispielsweise Handschuhe integriert sein, oder in eine Armbanduhr. Auch kann der Datenträger in Form einer Armbanduhr am Handgelenk getragen werden. Zudem kann der berührungslose Datenträger, also Chip und Antenne, Bestandteil des Mobiltelefons oder von dessen Gehäuse oder Schutzhülle oder eines anderen mit dem Mobiltelefon verbundenen Teils sein. Das Mobiltelefon kann also zugleich den Datenträger bilden, wodurch sich ein weiterer Gegenstand zu Aufnahme des Datenträgers erübrigt. Erfindungsgemäß sind die Karten, Handschuhe, Armbanduhren, Mobiltelefon bzw. dessen Gehäuse, Schutzhülle usw. dann sichtbar mit den Identifikationsdaten, z.B. Chipseriennummer oder dergleichen versehen, beispielsweise durch Aufdruck z.B. am Kartenrand oder z.B. Gravur auf der Rückseite der Armbanduhr.

Als Telekommunikationseinrichtung können mobile oder stationäre Kommunikationsendgeräte, z.B. Telefone oder ein PC mit Internetanschluss verwendet werden. Vorzugsweise kommen also Kommunikationsgeräte zusammen mit modernen Infrastrukturen, wie Internet, Mobiltelefone, Personal Digital Assistants und dergleichen zum Einsatz.

Statt der Buchung mit einem Mobiltelefon beispielsweise mit SMS (Short message service) ist auch eine Buchung durch ein Mobiltelefon mit WAP (Wireless application protocol) möglich.

Vorzugsweise wird ein Webserver verwendet, der die mit dem Mobiltelefon (GSM), über Internet oder dergleichen Telekommmunikationseinrichtung übermittelten Daten an die Wintersport- oder sonstige Anlage oder direkt an das Zutrittsterminal weiterleitet.

Von dem Server können mit der Telekommunikationseinrichtung vor der Buchung weitere Informationen erhalten werden, beispielsweise über die verschiedenen Skigebiete, Preise, Wetter, Besucherzahlen und dergleichen. Die Informationen können bei einem Mobiltelefon auf dessen Display angezeigt werden.

Bei einer Anlage, z.B. einem Wintersportgebiet mit einer Vielzahl von Zutrittsterminals können die Identifikationsund Berechtigungsdaten vom Server an eine Datenzentrale der betreffenden Anlage geleitet werden, die sie an die Datenkommunikationseinrichtung des Zugangsterminals weiterleitet.

Um den Kommunikationsaufwand zu verringern, können die Daten vom Server gegebenenfalls über die Datenzentrale der Anlage auch nur an die Datenkommunikationseinrichtung oder -einrichtungen weitergeleitet werden, die an dem Zutrittsterminal(s) z.B. Zubringerlift bzw. -liften einer Skiregion, also für den Erstzutritt, vorgesehen ist bzw. sind.

Wenn ein Server verwendet wird, ist das erfindungsgemäße Buchungsverfahren auch für die Betreiber der Anlage z.B. die Skiliftbetreiber transparent, da die Buchungsinformationen vom Server abgerufen werden können. Zudem bietet ein zentraler Server, der permanent gewartet wird, eine große Sicherheit.

Bei einer Buchung über Internet kann die Person, die eine Zugangsberechtigung zu buchen wünscht, auch zuerst die Homepage des betreffenden Wintersportgebietes aufrufen. Danach kann sie die Datenträgeridentifikationsdaten und die ausgewählten Zugangsberechtigungsdaten an den zuständigen Internetprovider übermitteln, der sie an den Server, die Datenzentrale des betreffenden Skigebiets oder direkt an die Zutrittsterminals weiterleitet.

Die Abrechnung der gebuchten Zugangsberechtigung kann bei einer Buchung über Telefon beispielsweise über die Telefonrechnung erfolgen, bei einer Internet-Buchung wie üblich durch ein E-Commerce-Verfahren mit Kreditkarte bzw. durch Einzug bei bekannt gegebenem Konto.

Mit dem erfindungsgemäßen Verfahren werden die Wintersportoder sonstigen Anlagen zudem über die Zahl der an dem jeweiligen Tag zu erwartenden Personen vorinformiert, sodass sie sich mit dem Personal, der Verpflegung usw. besser auf die zu erwartenden Gäste einrichten können. Wenn der Datenträger verloren geht, ist zudem erfindungsgemäß ein Geldersatz für die verloren gegangene gebuchte Zugangsberechtigung jederzeit möglich.

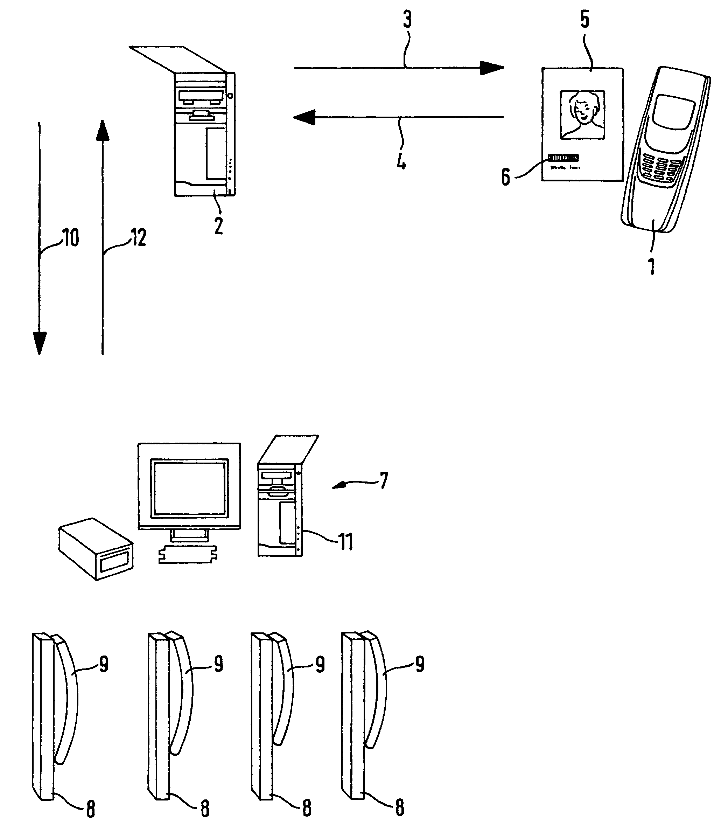

Nachstehend ist die Erfindung anhand der beigefügten Zeichnung näher erläutert, deren einzige Figur ein Blockdiagramm einer Ausführungsform des erfindungsgemäßen Verfahrens für eine Wintersportanlage zeigt.

Danach wird mit einem Mobiltelefon 1 von einem Webserver 2 gemäß dem Pfeil 3 ein Angebot für Skigebiete, Preise usw., eingeholt.

Anschließend kann gemäß dem Pfeil 4 für das ausgewählte Wintersportgebiet die Zugangsberechtigung gebucht werden, wobei mit dem Mobiltelefon 1 an den Server 2 die auf dem Datenträger, z.B. der Chipkarte 5 sichtbar angegebene Chipseriennummer 6 sowie die gewünschten Zugangsberechtigungsdaten, z.B. Tagespaß, Erwachsener, übermittelt werden.

Vom Server 2 werden diese Daten an die Datenzentrale 7 des betreffenden Wintersportgebiets gemäß Pfeil 10 weitergeleitet und von dort an die Zutrittsterminals 8 des nicht dargestellten Zubringerliftes.

Die Chipseriennummer 6 und die gebuchten Zugangsberechtigungsdaten werden in dem Rechner 11 der Datenzentrale des Wintersportgebiets gespeichert, der an die Zutrittsterminals 8 angeschlossen ist. Wenn der Wintersportler ein Zutrittsterminal 8 betritt, vergleicht der Rechner 11 der Zutrittsterminals 8 die Chipseriennummer, mit der der Chip in der Karte 5 der das Zutrittsterminal 8 betretenden Person codiert ist, über die das als Schreib/Lesegerät ausgebildete Datenkommunikationseinrichtung 9 mit den im Rechner 11 abgespeicherten Chipseriennummern.

Bei Übereinstimmung und damit Identifikation des Datenträgers 5 werden die gebuchten, gespeicherten Zutrittsberechtigungsdaten, wie Skigebiet oder Lift, Tagesskipaß, Erwachsener, in den Chip des Datenträgers geladen. Gemäß Pfeil 12 können die Buchungsinformationen von der Datenzentrale 7 des Wintersportgebietes vom Server 2 jederzeit abgerufen werden.

## Patentansprüche

1. Verfahren zum Buchen der Zugangsberechtigung zu einer Anlage, die mit einem codierbaren Datenträger (5) über ein Zutrittsterminal (8) zugänglich ist, wobei ein mit Identifikationsdaten codierter Datenträger (5) verwendet wird, die sichtbar (6) am Datenträger (5) angebracht sind, **dadurch gekennzeichnet, dass** das Zutrittsterminal (8) mit einer Datenkommunikationseinrichtung (9) zum Lesen und Codieren von Daten auf dem Datenträger (5) versehen ist, die Identifikationsdaten zusammen mit den zu buchenden Zugangsberechtigungsdaten über eine Telekommunikationseinrichtung an das Zutrittsterminal (8) oder an den Rechner (11) einer an das Zutrittsterminal (8) angeschlossenen Datenzentrale (7) übermittelt und dort abgespeichert werden, der Datenträger (5) bei Erreichen der Anlage am Zutrittsterminal (8) mit der Datenkommunikationseinrichtung (9) durch Vergleich der auf ihm codierten Identifikationsdaten mit den abgespeicherten Identifikationsdaten identifiziert wird und die im voraus gebuchten Zugangsberechtigungsdaten von der Datenkommunikationseinrichtung (9) auf den identifizierten Datenträger (5) codiert werden.

2. Verfahren nach Anspruch 1, **dadurch gekennzeichnet, dass** als Datenträger ein Datenträger (5) mit einem Chip verwendet wird und die Identifikationsdaten des Datenträgers (5) durch eine eindeutige Chipkennung gebildet werden, die auch sichtbar am Datenträger (5) angebracht ist.

3. Verfahren nach Anspruch 1 oder 2, **dadurch gekennzeichnet, dass** als Datenträger ein berührungslos kommunizierender Datenträger (5) verwendet wird.

4. Verfahren nach einem der vorhergehenden Ansprüche, **dadurch gekennzeichnet, dass** mindestens ein Server (2) verwendet wird, der die mit der Telekommunikationseinrichtung übermittelten Identifikations- und Buchungsdaten an die Datenkommunikationseinrichtung (9) weiterleitet.

5. Verfahren nach Anspruch 1 oder 4, **dadurch gekennzeichnet, dass** bei einer Anlage mit mehreren Zutrittsterminals (8) die Identifikations- und Buchungsdaten nur an die Datenkommunikationseinrichtung (9) desjenigen Zutrittsterminals (8) der Anlage weitergeleitet werden, das für den Erstzutritt zu der Anlage vorgesehen ist.

6. Verfahren nach Anspruch 1, **dadurch gekennzeichnet, dass** als Telekommunikationseinrichtung mobile oder stationäre Kommunikationsendgeräte verwendet werden.

7. Verfahren nach Anspruch 6, **dadurch gekennzeichnet, dass** als Telekommunikationseinrichtungen das Internet, Mobiltelefone und/oder Personal Digital Assistants eingesetzt werden.

8. Verfahren nach Anspruch 3, **dadurch gekennzeichnet, dass** der berührungslos kommunizierende Datenträger (5) Bestandteil des mobilen Kommunikationsendgeräts oder von dessen Gehäuse oder eines damit verbundenen Teils ist.

9. Verfahren nach einem der vorstehenden Ansprüche, **dadurch gekennzeichnet, dass** Datenträger in eine Uhr integriert ist oder die Form einer Uhr aufweist.

## Claims

1. A method for booking access entitlement for a facility accessible with a codable data carrier (5) via an access terminal (8), in which one uses a data carrier (5) coded with identification data which are provided visibly (6) on the data carrier (5), **characterized in that** the access terminal (8) is provided with a data communication device (9) for reading and coding data on the data carrier (5), the identification data are conveyed together with the access entitlement data to be booked via a telecommunication device to the access terminal (8) or to a computer (11) of a data center (7) connected to the access terminal (8) and stored there, the data carrier (5) is identified upon arrival at the facility at the access terminal (8) with the data communication device (9) by comparison of the identification data coded thereon with the stored identification data, and the previously booked access entitlement data are coded on the identified data carrier (5) by the data communication device (9).

2. A method according to claim 1, **characterized in that** one uses a data carrier (5) with a chip, and the identification data of the data carrier (5) are formed by a unique identifier stored in the chip and provided also visibly on the data carrier (5).

3. A method according to claim 1 or 2, **characterized in that** a contactlessly communicating data carrier (5) is used.

4. A method according to any of the above claims, **characterized in that** at least one server (2) is used which passes on the identification and booking data conveyed with the telecommunication device to the data communication device (9).

5. A method according to claim 1 or 4, **characterized in that** in case of a facility with a plurality of access terminals (8) the identification and booking data are passed on only to the data communication device (9) of that access terminal (8) of the facility which is intended for the first access to the facility.

6. A method according to claim 1, **characterized in that** the telecommunication devices used are mobile or stationary communication terminals.

7. A method according to claim 6, **characterized in that** the telecommunication devices used are the Internet, mobile phones and/or personal digital assistants.

8. A method according to claim 6 or 7, **characterized in that** the contactlessly communicating data carrier is part of the mobile communication terminal or its casing or a part connected therewith.

9. A method according to any of the above claims, **characterized in that** the data carrier is integrated into a watch or has the form of a watch.

## Revendications

1. Procédé d'enregistrement de l'autorisation d'accès à un système qui est accessible avec un support de données (5) apte à être codé, via un terminal d'accès (8), dans lequel on utilise un support de données codé avec des données d'identification qui sont installées de manière visible (6) sur le support de données, **caractérisé en ce que** le terminal d'accès (8) est pourvu d'un dispositif de communication de données (9) pour la lecture et le codage de données sur le support de données (5), **en ce que** les données d'identification, conjointement avec les données d'autorisation d'accès à enregistrer, sont transmises via un dispositif de télécommunication au terminal d'accès (8) ou à l'ordinateur (11) d'une centrale de données (7) connectée au terminal d'accès (8) et y sont mémorisées, **en ce que** le support de données (5) est identifié à l'arrivée du système au terminal d'accès (8) avec le dispositif de communication de données (9) en comparant les données d'identification codées sur lui avec les données d'identification mémorisées, et **en ce que** les données d'autorisation d'accès enregistrées au préalable sont codées par le dispositif de communication de données (9) sur le support de données (5) identifié.

2. Procédé selon la revendication 1, **caractérisé en ce qu'**on utilise comme support de donné un support de données (5) avec une puce, et **en ce que** les données d'identification du support de données (5) sont formées par un indicatif d'identification de puce univoque qui est aussi installé de manière visible sur le support de données (5).

3. Procédé selon la revendication 1 ou 2, **caractérisé en ce qu'**on utilise comme support de données un support de données (5) communiquant sans contact.

4. Procédé selon l'une des revendications précédentes, **caractérisé en ce qu'**on utilise au moins un serveur (2) qui transfert au dispositif de communication de données (9) les données d'identification et d'enregistrement transmises avec le dispositif de télécommunication.

5. Procédé selon la revendication 1 ou 4, **caractérisé en ce que** dans un système comportant plusieurs terminaux d'accès (8), les données d'identification et d'enregistrement ne sont transférées qu'au dispositif de communication de données (9) de celui des terminaux d'accès (8) du système, qui est prévu pour le premier accès au système.

6. Procédé selon la revendication 1, **caractérisé en ce qu'**on utilise comme dispositif de télécommunication des postes terminaux portables ou stationnaires.

7. Procédé selon la revendication 6, **caractérisé en ce qu'**on met en oeuvre comme dispositifs de télécommunication l'Internet, des téléphones portables et/ou des assistants numériques personnels.

8. Procédé selon la revendication 3, **caractérisé en ce que** le support de données (5) communiquant sans contact fait partie du poste terminal de communication portable ou de son boîtier ou d'une partie reliée à celui-ci.

9. Procédé selon l'une des revendications précédentes, **caractérisé en ce que** le support de données est intégré à une montre ou présente la forme d'une montre.
